# EUROPEAN PATENT APPLICATION

(11) **EP 1 172 971 A2**
(43) Date of publication of application: **16.01.2002**
(21) Application number: 01116935.6
(22) Date of filing: 11.07.2001
(51) Int. Cl.: H04L 12/56

(54) **Route retrieving system, method therefor and a router device to be used in the same**

(30) Priority: 12.07.2000 JP 2000210654
(71) Applicant: NEC CORPORATION, Tokyo (JP)
(72) Inventor: Kanehara, Fumikazu, Minato-ku, Tokyo (JP)
(74) Representative: Glawe, Delfs, Moll & Partner

(57) **Abstract**

A route retrieving system is more effective than the conventional binary tree retrieval in IP transmission device. The route retrieving system determines a next node to transmit on the basis of a destination address identifying a communication counterpart. The system includes a route memory establishing a tree structure of respective node entry information and route data in hierarchal structure, the tree structure having a M branch tree structure (M = 2^{N}) to be checked per N bit (N is an integer greater than or equal to 2) from upper bit of the destination address and route retrieval means for retrieving the node entry information of the memory from an initial hierarchal stage to lower hierarchal stage in sequential order based on the destination address, for deriving a corresponding route data.

## Description

### BACKGROUND OF THE INVENTION

### Field of the Invention

The present invention relates generally to a route retrieving system, a method therefor, a router device to be used in the same and a storage medium recording a control program therefor. More particularly, the invention relates to a route retrieving system for determining node for transmitting a reception packet on the basis of a destination address identifying a communication counterpart.

### Description of the Related Art

In Internet, when IP (Internet Protocol) packet is transmitted by a repeating equipment, such as a router device, the repeating equipment (router device) determines an IP address (hereinafter referred to "NH" (Next Hop address)) of the a next transfer destination with reference to a target (designation) address (hereinafter referred to as "DA"). This is route retrieval. The repeating equipment has a routing table associating the "DA" and the "NH" (route information memory). "NH" corresponding to "DA" is retrieved from the routing table per input IP packet.

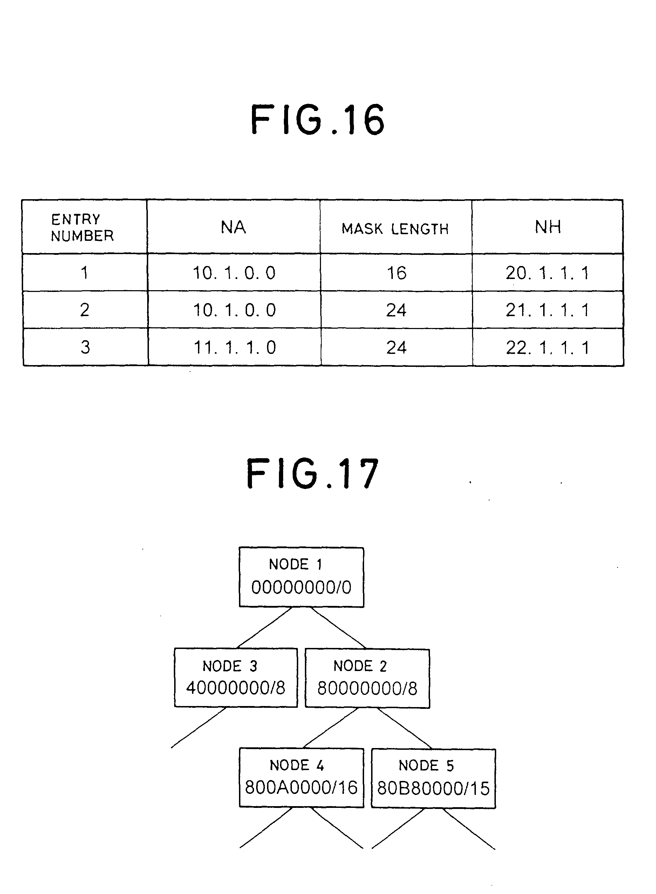

Fig. 16 shows an example of a routing table of IPv4 (IP version 4). In Fig. 16, "NA" and "mask length" indicates which network the "DA" belongs in. "NA" is a network address. On the other hand, the mask length represents that when the value of the mask length is "N", upper N bits among 32 bits are "1". Namely, in case of 24, it corresponds to "0xFFFFFF00" in hexadecimal expression. This is called as net mask. For example, when "DA" is "11.1.1.5", it belongs in the network represented by an entry of entry No.3. This is judged whether AND (logical muliplication) of "DA" and the net mask indicated by the mask length matches with "NA" of the same entry.

Here, it is assumed that IP packet having "DA" of "10.1.0.1" is input to the repeating equipment having the routing table shown in Fig. 16. The repeating equipment takes an entry having the longest mask length among entries having NAs in which "DA": 10.1.0.1 belongs. This is Longest Prefix Matching (LPM). In this example, as candidates of retrieval result, entries 1 and 2 are considered. Since the entrys has longer mask length, the entry 2 is selected as the retrieval result. Accordingly, the repeating equipment transmits the IP packet to the IP address of "21.1.1.1" indicated by "NH".

As set forth above, in IP route retrieval, it is possible that a plurality of candidates satisfying retrieval criterion in one retrieval is present to require leading out of the result by LPM. The cause is that "NA" in which "DA" belongs cannot be seen only from "DA" of the input IP packet. With the problems set forth above in mind, there are some proposals for mounting method of the routing table and retrieval process. The proposals may be generally separated into two kinds.

One of those two methods is a method for realizing by a dedicated hardware which is capable of parallel process. For example, by providing an inspection circuit per entry of the routing table, retrieval processes are performed for all entries in the routing table in parallel. While this method is high speed for permitting parallel access to respective entry in the routing table, cost thereof is high.

The other method is applicable for the case where parallel access to the routing table is not possible. This corresponds to mounting by software or a hardware employing a general purpose memory or FPGA (Field Programmable Gate Array). Such method can be realized at low cost using existing facility but speed is not as high as the parallel process.

These methods may be selectively used depending upon application or object. For an equipment for a large scale backbone network, for which large capacity transmission performance is required, the former method is suitable. On the other hand, for the equipment used in backbone of relatively medium or small size network, the latter may be sufficient.

Next, particular method will be discussed for the later method. The later method will be classified into a retrieval method using hash method and a retrieval method using a binary tree structure. The method using hash method is a method for degenerating "DA" with certain hash function and for retrieving the key. In case of IPv4, since address is 32 bits, if an entry space of thirty-second power of 2 (2³²) can be preliminarily provided, high speed retrieval becomes possible. However, it is not realistic in viewpoint of cost. By using a hash function, the entry space can be made small. However, by using a hash method, collision of entry may be caused. Furthermore, in case of IPv4, respective hash method has to be applied for simply thirty-one kinds of net mask patterns.

The method using the binary tree structure is general in software mounting. In Japanese Unexamined Patent Publication No. Heisei 11-191781, mounting method to hardware has been proposed. An example of binary tree structure is shown in Fig. 17. Each rectangle in Fig. 17 is referred to as node of binary tree. On the other hand, in the expression "xxxxxxxx/y" written in each node, "x" is "NA" in hexadecimal expression and "y" is a mask length.

For example, when "DA" is "0x800AC091", since "y" of node 1 is "0", the most significant bit of "DA" is checked to branch toward right if the most significant bit is "1" and to branch toward left if the most significant bit is "0". In this case, it branches toward right to make node 2 as the next inspection object. In the node 2, since the mask length is 8, AND of "0xFF000000" and "DA" is taken to check whether than result matches with the "NA" written in the node 2. If not match, since no entry corresponding to "DA" is present, retrieval becomes end. In the shown example, since the result matches with "NA" in the node 2, check is performed whether an inspection bit 8 (upper ninth bit) is "1" or "0", further branching is effected Foregoing process is repeated until no further branch is present or "NA" in the node does not match.

The method by the binary tree structure is more effective than the method using the hash method, as adapted to LPM. However, all of thirty-two bits has to be inspected by registered entry in the worst case. Particularly, in IPv6 (IP version 6) having a hundred twenty-eight bits of address space, efficiency becomes low.

### SUMMARY OF THE INVENTION

An object of the present invention is to provide a route retrieving system which is more effective than the conventional binary tree retrieval in IP transmission device.

According to the first aspect of the present invention, a route retrieving system for determining a next node to transmit on the basis of a destination address identifying a communication counterpart, comprises:
a route memory establishing a tree structure of respective node entry information and route data in hierarchal structure, the tree structure having a M branch tree structure (M = 2^{N}) to be checked per N bit (N is an integer greater than or equal to 2) from upper bit of the destination address; and
route retrieval means for retrieving the node entry information of the memory from an initial hierarchal stage to lower hierarchal stage in sequential order based on the destination address, for deriving a corresponding route data.

The node entry information may consist of a route data presence / absence information indicative of presence or absence of the route data in a corresponding node, a link presence / absence information indicative of presence or absence of a link to a lower hierarchal stage, a hierarchal value indicative of the lower hierarchal stage, a node ID identifying a node in the lower hierarchal stage, and a route data ID for identifying the route data and a network address corresponding to the node entry. An entry information of the route data may have at least an address value of the next node to transmit.

The route retrieving means may include address generating means for taking an initial hierarchal stage of the tree structure and a node ID of a root node as an initial value, reading out upper N bits of the destination address corresponding to the initial hierarchal stage and generating an address for reading out the route memory by using the upper N bits and a node ID of the root node, and child node judgment means for commanding generation of a reading out address of the node entry information of next lower hierarchal stage by making judgment of the link presence / absence information of the node entry information for transmitting the hierarchal stage information of a read out node entry information and the node ID to the address generating means when link is present.

Also, the route retrieving means may comprise address judgment means for making judgment of matching of the network address in the read out node entry information and the destination address, route data presence / absence judgment means for making judgment of the route data presence / absence information of the read out node entry information, and control means for controlling reading out of the memory depending upon result of judgment of the address judgment means, the route data presence and absence judgment means and the child node judgment means.

According to the second aspect of the present invention, a route retrieving method for determining a next node to transmit on the basis of a destination address identifying a communication counterpart, comprises:
step of providing a route memory establishing a tree structure of respective node entry information and route data in hierarchal structure, the tree structure having a M branch tree structure (M = 2^{N}) to be checked per N bit (N is an integer greater than or equal to 2) from upper bit of the destination address; and
route retrieval step of retrieving the node entry information of the memory from an initial hierarchal stage to lower hierarchal stage in sequential order based on the destination address, for deriving a corresponding route data.

The node entry information may consists of a route data presence / absence information indicative of presence or absence of the route data in a cirresoinding node, a link presence / absence information indicative of presence or absence of a link to a lower hierarchal stage, a hierarchal value indicative of the lower hierarchal stage, a node ID identifying a node in the lower hierarchal stage, and a route data ID for identifying the route data and a network address corresponding to the node entry. An entry information of the route data may have at least an address value of the next node to transmit.

The route retrieving step may include address generating step of taking an initial hierarchal stage of the tree structure and a node ID of a root node as an initial value, reading out upper N bits of the destination address corresponding to the initial hierarchal stage and generating an address for reading out the route memory by using the upper N bits and a node ID of the root node, and child node judgment step of commanding generation of a reading out address of the node entry information of next lower hierarchal stage by making judgment of the link presence / absence information of the node entry information for transmitting the hierarchal stage information of a read out node entry information and the node ID to the address generating step when link is present.

The route retrieving step may comprise address judgment step of making judgment of matching of the network address in the read out node entry information and the destination address, route data presence / absence judgment step of making judgment of the route data presence / absence information of the read out node entry information, and control step of controlling reading out of the memory depending upon results of judgment of the address judgment step, the route data presence / absence judgment step and the child node judgment step.

According to the third aspect of the present invention, a router device for determining a next node to transmit on the basis of a destination address identifying a communication counterpart, comprises:
a route memory establishing a tree structure of respective node entry information and route data in hierarchal structure, the tree structure having a M branch tree structure (M = 2^{N}) to be checked per N bit (N is an integer greater than or equal to 2) from upper bit of the destination address; and
route retrieval means for retrieving the node entry information of the memory from an initial hierarchal stage to lower hierarchal stage in sequential order based on the destination address, for deriving a corresponding route data.

According to the fourth aspect of the present invention, a storage medium recording a control program of a route retrieving method for determining a next node to transmit on the basis of a destination address identifying a communication counterpart, comprises:
step of providing a route memory establishing a tree structure of respective node entry information and route data in hierarchal structure, the tree structure having a M branch tree structure (M = 2^{N}) to be checked per N bit (N is an integer greater than or equal to 2) from upper bit of the destination address; and
route retrieval step of retrieving the node entry information of the memory from an initial hierarchal stage to lower hierarchal stage in sequential order based on the destination address, for deriving a corresponding route data.

Operation of the present invention will be discussed. Different from the conventional binary tree checking the target address per one bit, employing M branch tree structure checking per N bits (N > 1), number of times of access of retrieval table is reduced. It should be noted that M is a value of (N)th power of 2. Next, check is performed per N bits and enables longest prefix matching per bit.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1A is a conceptual illustration showing the conventional binary tree retrieval method;
Fig. 1B is a conceptual illustration of M branch (M > 2) retrieval method;
Fig. 2 is an illustration showing an example of a tree structure of route table of the present invention;
Fig. 3 is an illustration showing a relationship between an IP address and a node;
Fig. 4 is an illustration showing an example of node entry;
Fig. 5 is an illustration showing an example of route data entry structure;
Fig. 6 is an illustration showing a construction of a route retrieval circuit;
Fig. 7 is a flowchart showing operation of a child node judgment process portion 606;
Fig. 8 is a flowchart showing operation of an effective judgment processing portion 607;
Fig. 9 is a flowchart showing operation of a NA judgment processing portion 608;
Fig. 10 is a flowchart showing operation of a L field judgment processing portion 609;
Fig. 11 is an illustration showing a logic of process of the control portion 611;
Figs. 12A and 12B are illustrations for explaining necessity of NA judgment processing portion 608;
Fig. 13 is an illustration showing a construction of a node entry in another embodiment of the present invention;
Fig. 14 is an illustration showing a construction of a route data entry of another embodiment of the present invention;
Fig. 15 is an illustration showing a construction of a route retrieving circuit 600 of another embodiment of the present invention;
Fig. 16 is an illustration for explaining an example of LPM (Longest Prefix Matching); and
Fig. 17 is an illustration for explaining an example of the conventional binary tree structure.

### DESCRIPTION OF THE PREFERRED EMBODIMENT

The present invention will be discussed hereinafter in detail in terms of the preferred embodiment of a route retrieving system of the present invention with reference to the accompanying drawings. In the following description, numerous specific details are set forth in order to provide a thorough understanding of the present invention. It will be obvious, however, to those skilled in the art that the present invention may be practiced without these specific details.

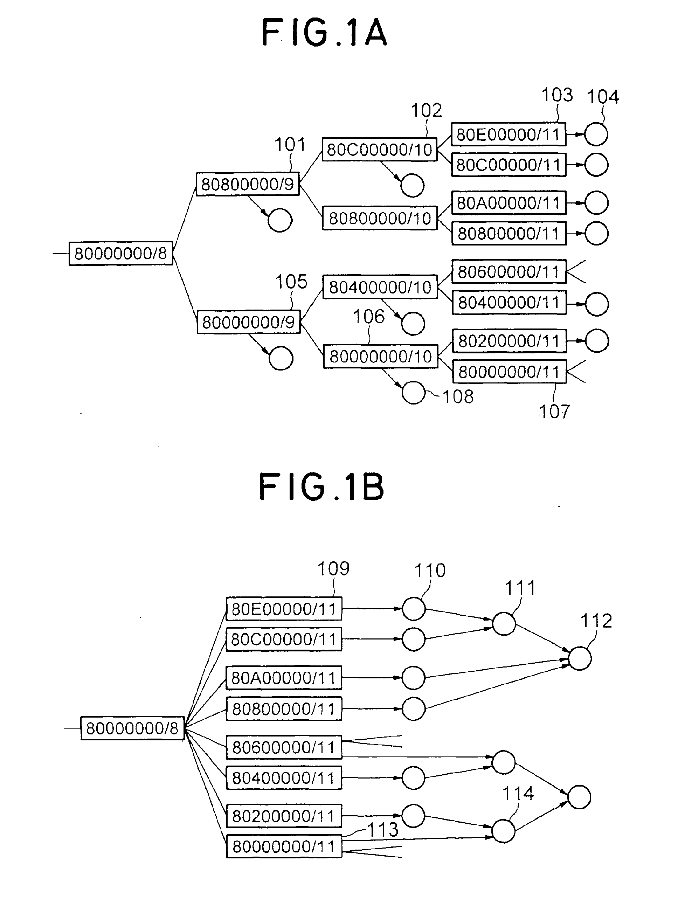

Fig. 1A is a conceptual illustration showing the conventional binary tree retrieval method and Fig. 1B is a conceptual illustration of "M" branch (M > 2) retrieval method. In Figs. 1A and 1B, rectangular blocks represent nodes and circular blocks represent data regions. The node has information for retrieval. In the data region, data (route information) of the result to be output is stored. In practice, node and data region are present on the memory, and in the node, an address of data region is stored.

For example, when the IP address to be a retrieval key is "0x80E10001", nodes 101, 102 and 103 become candidate. Amongst, a node having the longest matching length becomes the final result and is output to the data region 104. On the other hand, when the IP address is "0x80000001", and assuming that no matching node is below a node 107, the node 106 becomes the result of retrieval to be output to the data region 108. Here, attention should be paid that, nodes 101, 102, and 103 in case of former example and the nodes 105 and 106 in the later example have to be inspected for binary tree.

Fig. 1B shows an example, where the binary tree structure is replaced with a "M" branch tree structure proposed by the present invention. Here, it is assumed that "M" is 8 and "N" is 3. Namely, by checking the ninth, tenth and eleventh bits of the IP address in a lump, a branching destination can be determined. In this case, since there is no node having net mask length of 9 or 10, entries having net mask lengths of 9 and 10 cannot be retrieved. Therefore, as shown in Fig. 1B, the data region is linked to the node from one having longer net mask length within a range of bit width of "N".

For example, in case of "0x80E10001", the node 109 becomes candidate and the data region becomes 110. Here, a data region 111 corresponds to the data region of the node 102, but, since the data regions are linked to the node in descending order of the net mask length, the data region 110 linked to the node 109 is the result, and data in the data regions 111 and 112 are not required to be read out. Similarly, in case of "0x80000001", in the node 113, since there is no entry corresponding to the net mask length 11, and furthermore, if no result is present in the next node, the data region from which data is to be output becomes 114. In such method of the present invention in comparison with the conventional binary tree structure, number of stages of the nodes can be reduced, and Longest Prefix Matching (LPM) can be done quite easily.

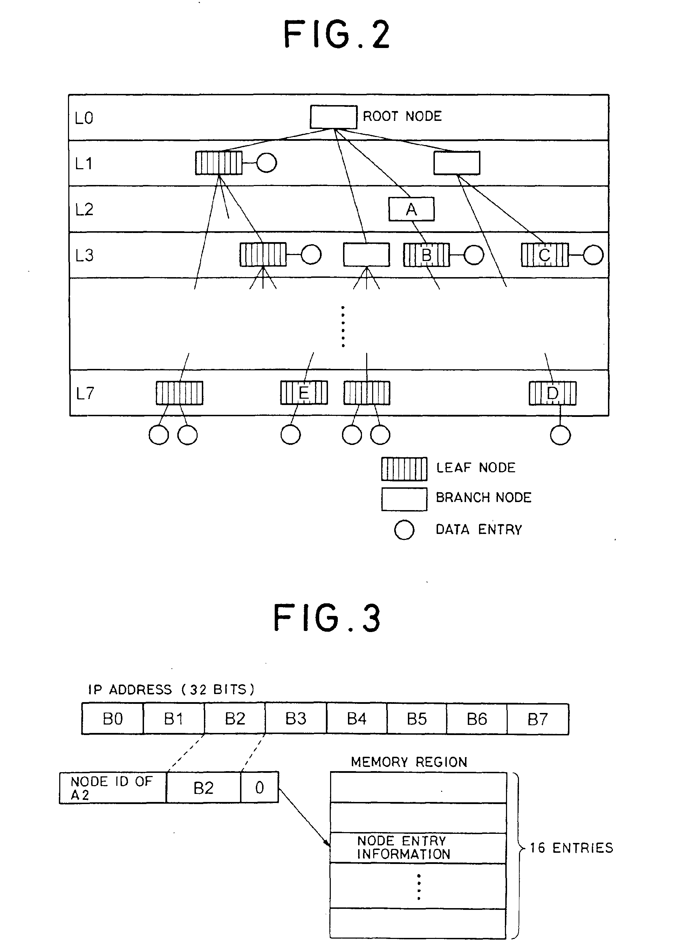

Discussion will be given for an embodiment of the case of sixteen branch tree adapted to IPv4. Fig. 2 is an illustration conceptually showing the tree structure of the shown embodiment. The tree is divided into eight hierarchal stages L0 to L7. The tree is consisted of nodes and route data. Each node is identified by unique node identifier NID. Each node is sixteen node entries. The nodes includes a root node, leaf nodes and branch nodes. The root node is a fixed node at the hierarchal stage L0. The branch nodes are located at hierarchal stages other than the hierarchal stage L0. One of the entries of the node has a branch linked to other node in the lower hierarchal stage. Each leaf node is a node, one of the node entry of which has route data. The branch node may be the leaf node. In construction, each node and the route data occupy each one region on a memory.

Fig. 3 shows a relationship between IPv4 address and a tree structure. Thirty-two bits of IPv4 address is divided into blocks per four bits and respective blocks are identified by B0 to B7. B0 to B7 corresponds to respective hierarchal stages of L0 to L7 of Fig. 2. For example, a relationship between the node A and the node B of Fig. 2 becomes a relationship shown in Fig. 3. Namely, the node entry of the node B is generated by adding a bit string of the block corresponding to the hierarchal stage of the node A and further adding several bits of "0" as required to "NID" of the node A. This becomes an address of the node entry forming the node B.

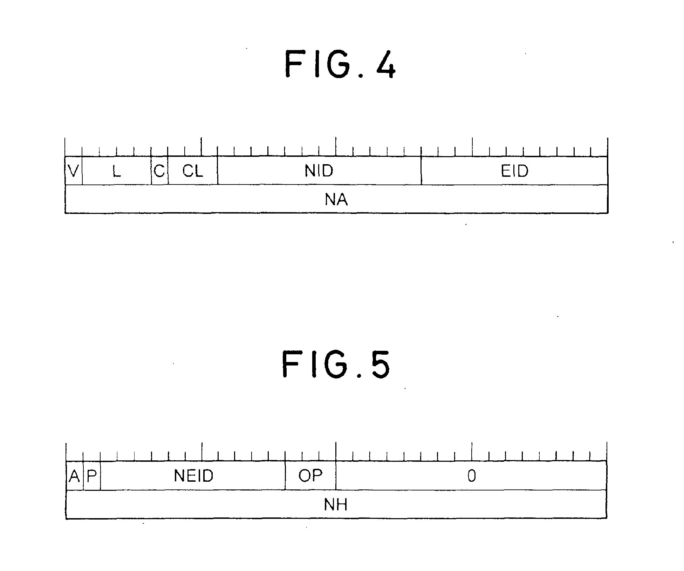

Fig. 4 shows a structure of the node entry. In Fig. 4, "V" indicates that the node entry is valid or not, wherein "1" denotes valid node and "0" represents null node. When the node is null, informations of other field have no meaning at all. "L" represents whether the relevant node entry has the route data or not. Therefore, it can be one bit construction indicating "1" or "0". However, in the shown embodiment, four bits are assigned for the following reason. When "L" filed is other than "0000", the node has the route data. "C" represents presence or absence of the link to lower hierarchal stage. When "C" is "1", it represents that the node entry has a link to the node in the lower hierarchal stage.

"CL" represents a hierarchy of the node of the lower hierarchal stage which is effective when "C" is "1" and linked. "NID" represents a node ID of lower hierarchal stage, which is effective when "C" is "1". "EID" is an identifier of the route data. By "EID", a memory address storing the route data is uniquely identified. "EID" is effective when "L" is other than "0000". Finally, "NA" is a network address corresponding to node entry.

Here, discussion will be given for use of "L". The tree is constituted 4 bit block of IPv4. Therefore, when the net mask length is not the four bit boundary, "L" field is used. In the shown embodiment, the block is consisted of four bits, "L" field is also consisted of four bits. Discussing for the example of Fig. 3, when "L" is "1***", the route data corresponding to the net mask length of 12 is present. Similarly, when "L" is *1**, the net mask length is 11, when "L" is "**1*", the net mask length is 10 and so on. At this time, according to Longest Prefix Matching (LPM), the identifier of the LPM route data is set as "EID". For example, when "L" is "1010", the identifier of the route data corresponding to the net mask length of 12 becomes "EID".

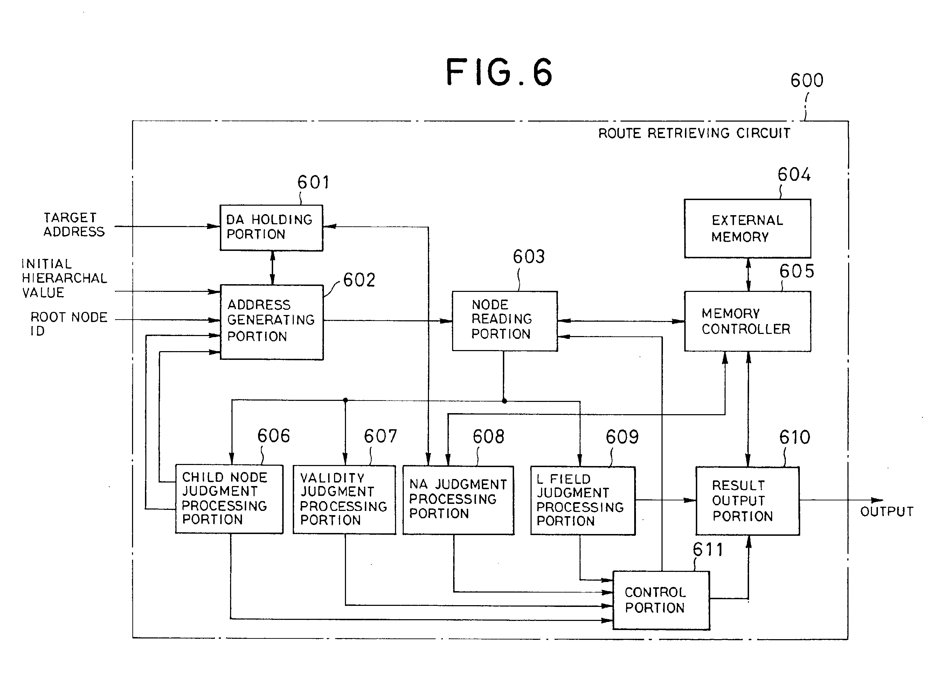

Fig. 5 shows an example of a structure of the route data. When "A" is "1", it represents that the route data is effective. When "P" is "1", it represents that a link to other route data is present. In "NEID", "EID" of the route data to the link destination is stored. "NH" and "OP" are respectively IP address and output port of the destination. Taking the example of Fig. 1, in "NEID" field of the route data 110, "EID" of the route data 111 is stored. A route retrieving circuit 600 in the repeating equipment (router device) based on the tree structure set forth above, is illustrated in a form of block diagram of Fig.6.

At first, in the route retrieving circuit 600, thirty-two bits of a target IP address (DA), an initial hierarchal stage (corresponding to L0 of Fig. 2) and ID of the root node of Fig. 2 are input. The value of the initial hierarchal stage is "0" and the root node ID is a fixed value. Input "DA" is stored in a DA holding portion 601. An address generating portion 602 is reads out a block (B2 in the example of Fig. 3) corresponding to "CL" (indicative of lower hierarchal stage of the node) to be supplied by a child node judgment process portion 606, and generates an address shown in Fig. 3 using a bit string of the block and the "NID" (indicative of node ID of the lower hierarchal stage) supplied from the child node judgment process 606, to output to the node read out portion 603.

The address generating portion 602 holds a read out hierarchal value indicative of a hierarchal value (B0 to B7 of Fig. 3) for reading out from "DA" and node ID. At first, input initial hierarchal value is used as the read out hierarchal value, and the root node ID (fixed value) is used as the node ID. The node read out portion 603 receives a node read out demand from a control portion 611 and reads out the node entry of the address output fromthe address generating portion 602 to output to the child node judgment processing portion 606, a validity judgment processing portion 607, an NA judgment processing portion 608 and a L field judgment processing portion 609, respectively.

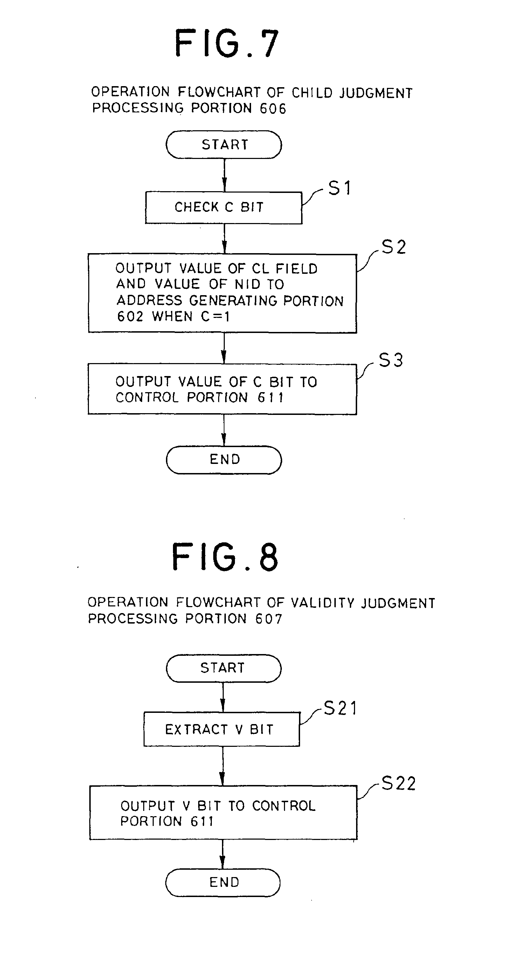

As shown in operation flowchart of Fig. 7, the child judgment processing portion 606 checks "C" bit of the node entry (step S1). If "C" is "1", the value of the "CL" field and the value of "NID" are output to the address generating portion 602 (step S2). The address generating portion 602 generates next address using the "CL" value and "NID" value. The child node judgment processing portion 606 outputs the value of "C" bit to the control portion 611, simultaneously (step S3). As shown in operation flow of Fig. 8, the validity judgment processing portion 607 extracts "V" bit of the node entry (step S21) to output to the control portion 611 (step S22).

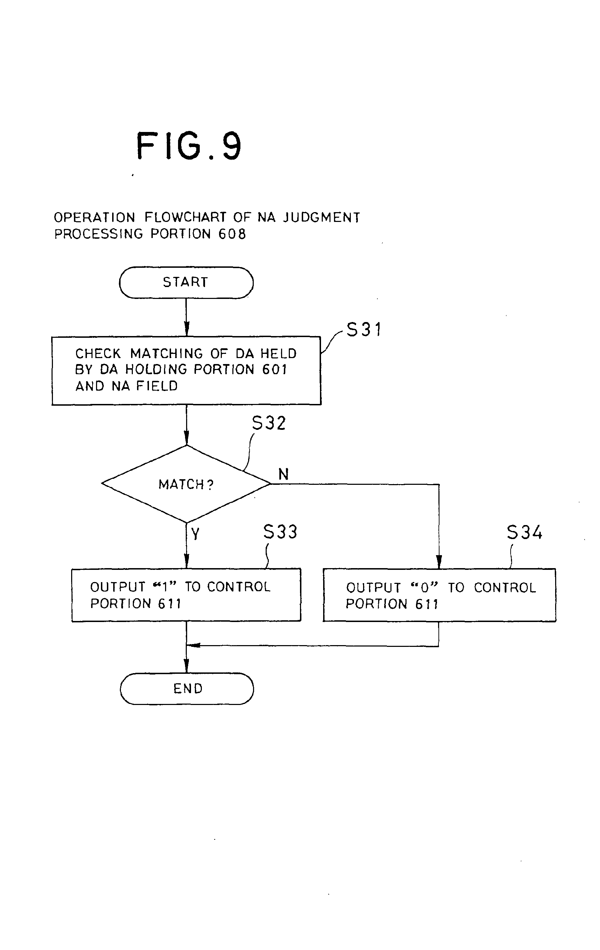

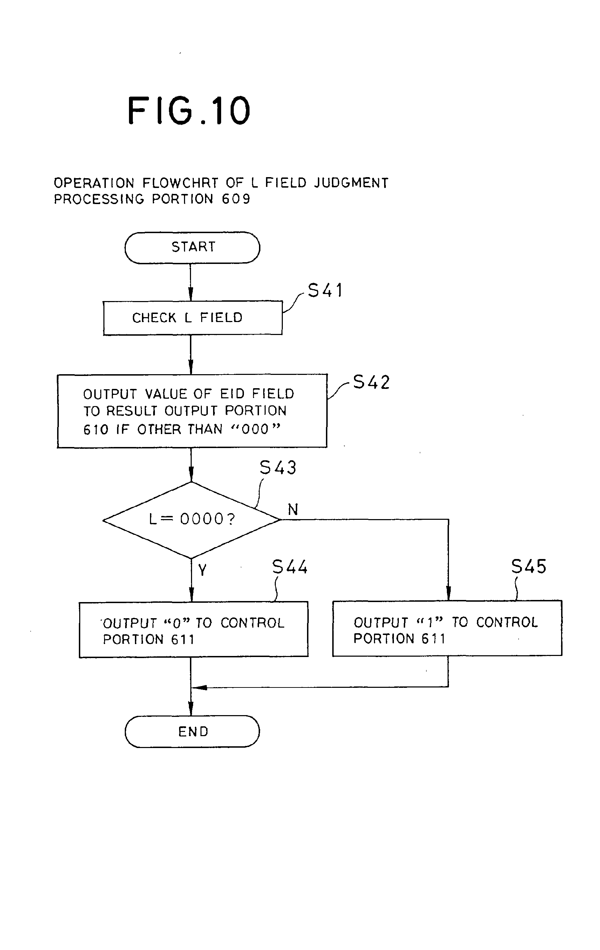

As shown in operation flow of Fig. 9, the NA judgment processing portion 608 takes AND of "DA" held by the DA holding portion 601 and the "NA" field of the node entry (step S31), and the result is checked whether it is the same as the "NA" field of the node entry or not (step S32). If the same, "1" is output to the control portion 611 (step S33), and if different, "0" is output to the control portion 611 (step S34). As shown in operation flowchart of Fig. 10, the L field judgment processing portion 609 checks the "L" filed of the node entry (step S41). If "L" field is other than "0000", the value of the "EID" field of the node entry is output to a result output portion 610 (step S42). On the other hand, when the "L" is "0000", "0" is output to the control portion 611 (steps S43, S44), and "L" is other than "0000", "1" is output to the control portion 611 (step S45).

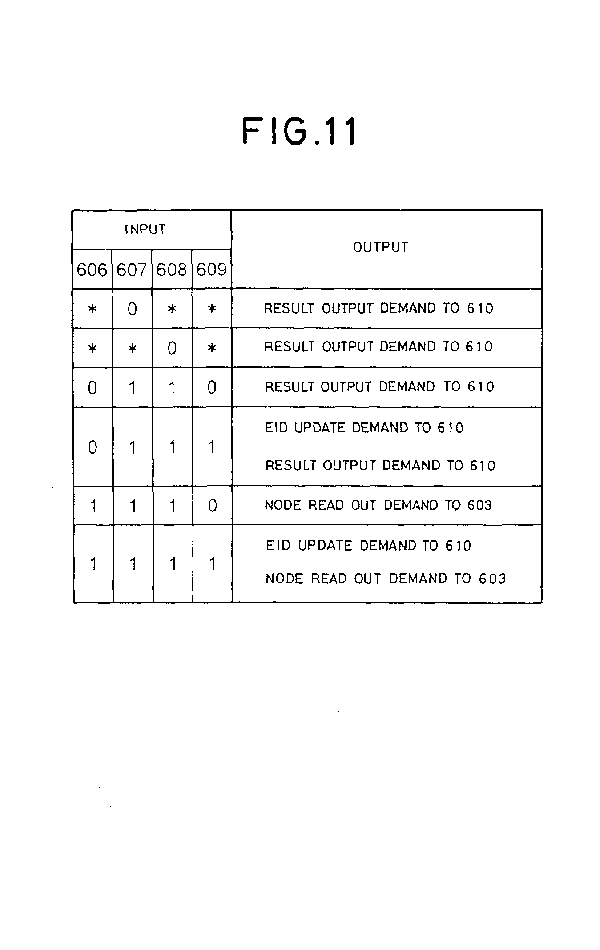

Content of process of the control portion 611 is shown in Fig. 11. Inputs from the child node judgment processing portion 606, the validity judgment processing portion 607, the NA judgment processing portion 608 and the L filed judgment processing portion 609 are expressed by one bit, respectively to form four bit input value as shown in Fig. 11. By combination of respective input value of four bits, the control portion 611 outputs, the a node read out demand signal to the node read out portion 603 and outputs a result output demand signal and "EID" demand signal to the result output portion 610.

The result output portion 610 holds the "EID" output from the L field judgment processing portion 609 only upon reception of "EID" updating demand from the control portion 611. When already held "EID" is present, the held "EID" is updated. On the other hand, when result output demand from the control portion 611 is received, the route data is read out from an external memory 604 via a memory controller 605, and outputs "OP" and "NH" values of the read out route data. If "EID" to be held is not present, a signal indicative of failure of retrieval is output.

Through the foregoing process, nodes of the tree established as memory region is traced in sequential order to find desired route information.

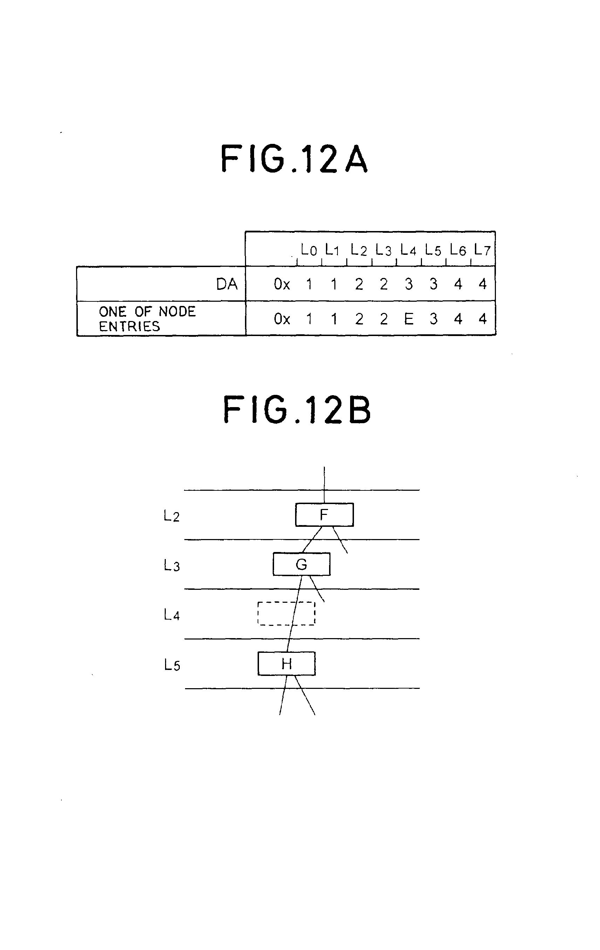

Here, necessity of judgment process of the NA judgment processing portion 608 in Fig. 8, namely necessity judgment of matching of the input "DA" value held in the DA holding portion 601 and the "NA" value of the node entry read out by the node read out portion 609 by taking AND, will be discussed with reference to Fig. 12. For example, a case shown in Fig. 12A, in which "DA" value is "0x11223344" and "DA" value of one node entry is "0x1122E344", namely the tree structure shown in Fig. 12B is considered.

At this time, in the shown embodiment judgment process is performed from the initial hierarchal stage L0 to L7 per block of four bits, the node entry corresponding to NA = 0x1122E344 is read out at the hierarchal stage 4. This value of "NA" is different from "DA" at the hierarchal stage L4, this entry has to be dropped as not satisfy the condition. Therefore, NA judgment processing portion 608 is provided to perform matching judgment by comparing all bit values of "DA" and "NA".

As another embodiment, discussion will be given for the case where the "NA" is not present in the node entry information but in the route data information. In the method the present invention, it is possible that the memory size of the node unnecessarily becomes large. Particularly, when bit number of the block becomes large or when the IPv6 having large address length is handled, the memory size has to be suppressed.

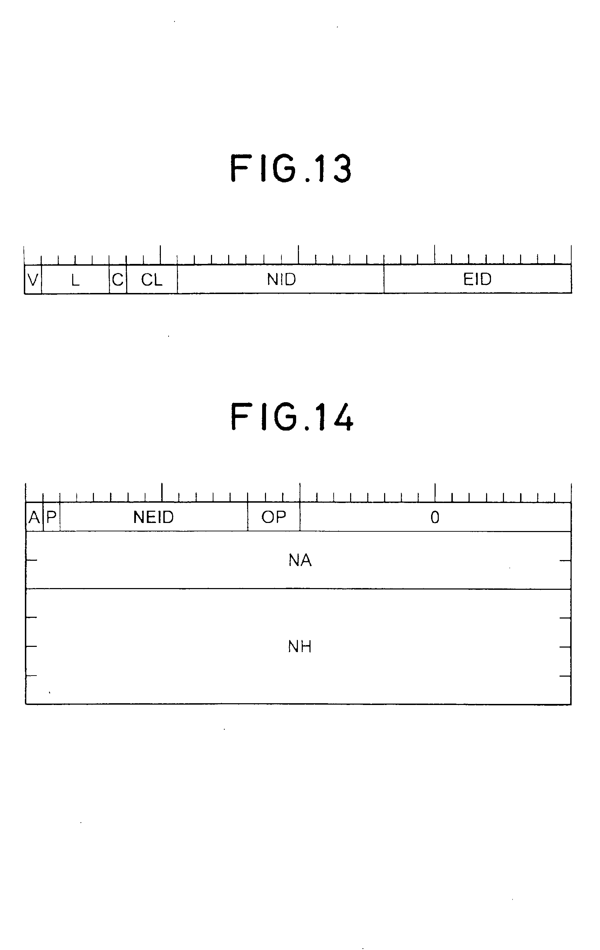

In this embodiment, IPv6 address is taken as example. In IPv6, the network address is upper sixty-four bits. This information is provided not in the node entry but in the route data. By this, memory size of the node entry becomes small. In this case, a structure of the node entry is shown in Fig. 13 and a structure of the route data is shown in Fig. 14, respectively.

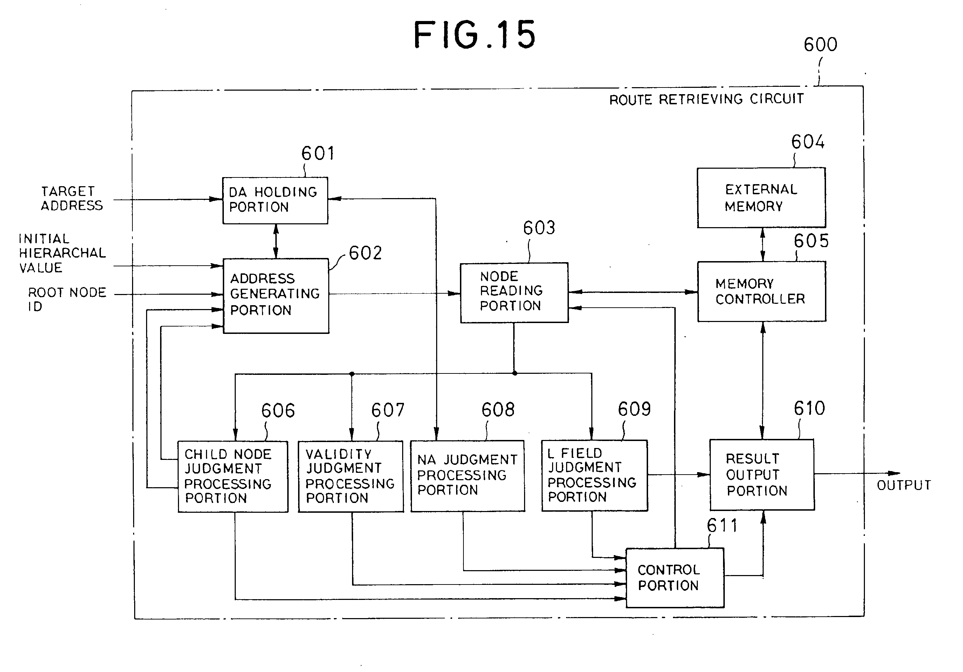

Fig. 15 is a block diagram showing a construction of the shown embodiment of the route retrieving circuit 600. Like components to those of Fig. 6 will be identified by like reference numerals. In Fig. 15, a component different from the construction of Fig. 6 is an NA judgment processing portion 608. When the NA judgment processing portion 608 makes judgment that the route data in the L filed judgment process portion 609 presents, the NA judgment processing portion 608 receives "EID" from the L field judgment process portion 609, reads out "NA" value in the route data from the external memory 604 via the memory controller 605 and then performs similar process to the NA judgment processing portion 608 of Fig. 6. Other circuit construction performs the same process as the circuit construction of Fig. 6. Redundant discussion for the process common to the circuit construction shown in Fig. 6 will be eliminated for simplification of the disclosure and thus for facilitating clear understanding of the present invention.

It should be noted that construction other than the DA holding portion 601, the memory 604, the memory controller 605 and so forth shown in Fig. 6 and Fig. 15 may be realized by preliminarily storing control programs in a read-only storage medium and by performing control operation by reading out the control program by a computer (CPU).

The present invention realizes a method dividing IP address into blocks and simultaneously checking a plurality of bits instead of checking per one bit, by employing M branch tree (M > 2). Therefore, number of times of access to the retrieval table can be reduced in comparison with binary tree retrieval. Also, checking a plurality of bits in a lump encounters a problem in that the net mask length can be handled per a unit of plurality of bits. However, the present invention enables handling of the net mask length per one bit, by employing a construction where the route data is linked.

Such retrieving method handing the IP address per block is particularly effective for the case of handling IPv6 packet having address of 128 bit length which is four times of the IPv4 address.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A route retrieving system for determining a next node to transmit on the basis of a destination address identifying a communication counterpart, comprising:
a route memory establishing a tree structure of respective node entry information and route data in hierarchal structure, said tree structure having a M branch tree structure (M = 2^{N}) to be checked per N bit (N is an integer greater than or equal to 2) from upper bit of said destination address; and
route retrieval means for retrieving said node entry information of said memory from an initial hierarchal stage to lower hierarchal stage in sequential order based on said destination address, for deriving a corresponding route data.

2. A route retrieving system as set forth in claim 1, wherein said node entry information consists of a route data presence / absence information indicative of presence or absence of said route data in a corresonding node, a link presence / absence information indicative of presence or absence of a link to a lower hierarchal stage, a hierarchal value indicative of the lower hierarchal stage, a node ID identifying a node in said lower hierarchal stage, and a route data ID for identifying said route data and a network address corresponding to said node entry.

3. A route retrieving system as set forth in claim 2, wherein an entry information of said route data has at least an address value of the next node to transmit.

4. A route retrieving system as set forth in claim 2, wherein said route retrieving means includes address generating means for taking an initial hierarchal stage of said tree structure and a node ID of a root node as an initial value, reading out upper N bits of said destination address corresponding to said initial hierarchal stage and generating an address for reading out said route memory by using said upper N bits and a node ID of said root node, and child node judgment means for commanding generation of a reading out address of said node entry information of next lower hierarchal stage by making judgment of said link presence / absence information of said node entry information for transmitting said hierarchal stage information of a read out node entry information and said node ID to said address generating means when link is present.

5. A route retrieving system as set forth in claim 4, wherein said route retrieving means comprises address judgment means for making judgment of matching of said network address in said read out node entry information and said destination address, route data presence / absence judgment means for making judgment of said route data presence / absence information of said read out node entry information, and control means for controlling reading out of said memory depending upon results of judgment of said address judgment means, said route data presence / absence judgment means and said child node judgment means.

6. A route retrieving method for determining a next node to transmit on the basis of a destination address identifying a communication counterpart, comprising:
step of providing a route memory establishing a tree structure of respective node entry information and route data in hierarchal structure, said tree structure having a M branch tree structure (M = 2^{N}) to be checked per N bit (N is an integer greater than or equal to 2) from upper bit of said destination address; and
route retrieval step of retrieving said node entry information of said memory from an initial hierarchal stage to lower hierarchal stage in sequential order based on said destination address, for deriving a corresponding route data.

7. A route retrieving method as set forth in claim 6, wherein said node entry information consists of a route data presence / absence information indicative of presence or absence of said route data in a corresponding node, a link presence / absence information indicative of presence or absence of a link to a lower hierarchal stage, a hierarchal value indicative of the lower hierarchal stage, a node ID identifying a node in said lower hierarchal stage, and a route data ID for identifying said route data and a network address corresponding to said node entry.

8. A route retrieving method as set forth in claim 7, wherein an entry information of said route data has at least an address value of the next node to transmit.

9. A route retrieving method as set forth in claim 7, wherein said route retrieving step includes address generating step of taking an initial hierarchal stage of said tree structure and a node ID of a root node as an initial value, reading out upper N bits of said destination address corresponding to said initial hierarchal stage and generating an address for reading out said route memory by using said upper N bits and a node ID of said root node, and child node judgment step of commanding generation of a reading out address of said node entry information of next lower hierarchal stage by making judgment of said link presence / absence information of said node entry information for transmitting said hierarchal stage information of said read out node entry information and said node ID to said address generating step when link is present.

10. A route retrieving method as set forth in claim 9, wherein said route retrieving step comprises address judgment step of making judgment of matching of said network address in said read out node entry information and said destination address, route data presence / absence judgment step of making judgment of said route data presence / absence information of said read out node entry information, and control step of controlling reading out of said memory depending upon results of judgment of said address judgment step, said route data presence / absence judgment step and said child node judgment step.

11. A router device for determining a next node to transmit on the basis of a destination address identifying a communication counterpart, comprising:
a route memory establishing a tree structure of respective node entry information and route data in hierarchal structure, said tree structure having a M branch tree structure (M = 2^{N}) to be checked per N bit (N is an integer greater than or equal to 2) from upper bit of said destination address; and
route retrieval means for retrieving said node entry information of said memory from an initial hierarchal stage to lower hierarchal stage in sequential order based on said destination address, for deriving a corresponding route data.

12. A router device as set forth in claim 11, wherein said node entry information consists of a route data presence / absence information indicative of presence or absence of said route data in a corresponding node, a link presence / absence information indicative of presence or absence of a link to a lower hierarchal stage, a hierarchal value indicative of the lower hierarchal stage, a node ID identifying a node in said lower hierarchal stage, and a route data ID for identifying said route data and a network address corresponding to said node entry.

13. A router device as set forth in claim 12, wherein an entry information of said route data has at least an address value of the next node to transmit.

14. A router device as set forth in claim 12, wherein said route retrieving means includes address generating means for taking an initial hierarchal stage of said tree structure and a node ID of a root node as an initial value, reading out upper N bits of said destination address corresponding to said initial hierarchal stage and generating an address for reading out said route memory by using said N bits and a node ID of said root node, and child node judgment means for commanding generation of a reading out address of said node entry information of next lower hierarchal stage by making judgment of said link presence / absence information of said node entry information for transmitting said hierarchal stage information of said read out node entry information and said node ID to said address generating means when link is present.

15. A router device as set forth in claim 14, wherein said route retrieving means comprises address judgment means for making judgment of matching of said network address in said read out node entry information and said destination address, route data presence / absence judgment means for making judgment of said route data presence / absence information of said read out node entry information, and control means for controlling reading out of said memory depending upon results of judgment of said address judgment means, said route data presence / absence judgment means and said child node judgment means.

16. A storage medium recording a control program of a route retrieving method for determining a next node to transmit on the basis of a destination address identifying a communication counterpart, comprising:
step of providing a route memory establishing a tree structure of respective node entry information and route data in hierarchal structure, said tree structure having a M branch tree structure (M = 2^{N}) to be checked per N bit (N is an integer greater than or equal to 2) from upper bit of said destination address; and
route retrieval step of retrieving said node entry information of said memory from an initial hierarchal stage to lower hierarchal stage in sequential order based on said destination address, for deriving a corresponding route data.

17. A storage medium as set forth in claim 16, wherein said node entry information consists of a route data presence / absence information indicative of presence or absence of said route data in a corresponding node, a link presence / absence information indicative of presence or absence of a link to a lower hierarchal stage, a hierarchal value indicative of the lower hierarchal stage, a node ID identifying a node in said lower hierarchal stage, and a route data ID for identifying said route data and a network address corresponding to said node entry.

18. A storage medium as set forth in claim 17, wherein an entry information of said route data has at least an address value of the next node to transmit.

19. A storage medium as set forth in claim 17, wherein said route retrieving step includes address generating step of taking an initial hierarchal stage of said tree structure and a node ID of a root node as an initial value, reading out upper N bits of said destination address corresponding to said initial hierarchal stage and generating an address for reading out said route memory by using said N bits and a node ID of said root node, and child node judgment step of commanding generation of a reading out address of said node entry information of next lower hierarchal stage by making judgment of said link presence / absence information of said node entry information for transmitting said hierarchal stage information of said read out node entry information and said node ID to said address generating step when link is present.

20. A storage medium as set forth in claim 19, wherein said route retrieving step comprises address judgment step of making judgment of matching of said network address in said read out node entry information and said destination address, route data presence / absence judgment step of making judgment of said route data presence / absence information of said read out node entry information, and control step of controlling reading out of said memory depending upon results of judgment of said address judgment step, said route data presence / absence judgment step and said child node judgment step.
